# EUROPEAN PATENT APPLICATION

(11) **EP 1 160 566 A2**
(43) Date of publication of application: **05.12.2001**
(21) Application number: 01201963.4
(22) Date of filing: 25.05.2001
(51) Int. Cl.: G01N 21/55

(54) **Apparatus for the continuous detection of oils on water surfaces by means of surface reflection**

(30) Priority: 31.05.2000 IT MI001210
(71) Applicant: CESI Centro Elettrotecnico Sperimentale Italiano Giacinto Motta S.P.A., 20134 Milano (IT)
(72) Inventor: Carrer, Isabella, 20050 Lesmo (Milano) (IT); Martinotti, Valter, 23878 Verderio Superiore (Lecco) (IT)
(74) Representative: Mittler, Enrico

(57) **Abstract**

The present invention refers to an apparatus for the continuous detection of oils on a water surface (50), comprising at least one light source (2; 2, 300) that sends a ray of light with a given wave length along a first direction, inclined in relation to the water surface (50), a detecting device (3) equipped with at least one receiving means (3; 3, 600) positioned so as to receive the luminous radiation reflected by the water surface (50) along a first direction symmetrical to the first, an acquisition and elaboration system (6) for data coming from the detecting device (3). The light source (2; 2, 300) and the receiving means (3; 3, 600) are placed on a floating platform (4) positioned on a buoy (5) so as to find itself at a basically fixed distance from the water surface (50).

## Description

The present invention refers to an apparatus for the continuous detection of oils present on water surfaces by means of surface reflection.

Techniques are generally known for the detection of pollution of waters by identification of oily compounds that can cause damage to the environment, leading to an alteration of the quality of the water and to an alteration of the oxygen exchange processes with detrimental consequences to aquatic life.

These techniques are used in various cases, for example in monitoring wastewaters coming from industrial plants, controlling the quality of waters destined for conditioning, monitoring the washout waters coming from airport areas.

The oily substances are most probably distributed on the surface of the water in function of their different density and this entails the use of analysis techniques that probe the interface between the two means. The parameter "total hydrocarbons" is explicitly indicated in the current norm relating to exhaust waters (DLgs n° 152 dated 11 May 1999). Its determination presupposes the use of analysis techniques, which are simple, rapid, low cost and reliable, possibly continuous and automatic.

A technique for the detection of surface oils must have the following characteristics:
- the possibility of carrying out very frequent or continuous measurements for the prompt detection of the presence of oils;
- a simple operating method so that it can be reliably applied to any type of plant;
- low environmental impact;
- sufficient sensitivity to permit the detection of thin films of oils on the water surfaces;
- limited maintenance;
- the possibility of eliminating false positive signals deriving from the presence of surface components of a different nature (leaves, debris, etc);
- reduced influence of external parameters such as the height and roughness of the surface of the waters and the reflection of the sunlight;
- the possibility of transmitting alarm signals should the values exceed the preset thresholds.

The instruments and the techniques at present being used for the surface detection of oils are basically of two types:
- by reflection, which provides for the measurement of the variation of the intensity of a radiation in the presence of a layer of oil present on the surface;
- by fluorescence, which provides for the measurement of the fluorescence emitted by the layer of oil energised by a ray of light with a suitable wave length.

In both cases the instrument does not come into contact with the surface of the water.

The reflection instruments are generally used more; the radiation emitted by them for the detection of oils can be perpendicular to the surface of the water and in such case the instruments are positioned at a fixed distance from the water surface, which can vary in a range from several tens of centimetres to a few metres, or they can form an angle, different from a right-angle, with the same surface and in such case the instruments can more greatly suffer from the influence of the level of the water and must adopt certain devices to compensate this disadvantage.

In view of the state of the technique described, the object of the present invention is to provide an apparatus for the continuous detection of oils on water surfaces by means of surface reflection which is free from the above-mentioned inconvenience.

In accordance with the present invention, said object is reached by means of an apparatus for the continuous detection of oils on a water surface, comprising at least one light source which transmits a ray of light with a given wave length along a first direction inclined in relation to said water surface, a detection device equipped with at least one receiving means positioned so as to receive the light radiation reflected by said water surface along a second direction, symmetrical in relation to the first, an acquisition and elaboration system for data coming from said detection device, characterised in that said light source and said receiving means are placed on a floating platform positioned on buoys so that they are at a basically fixed distance from said water surface.

The characteristics and the advantages of the present invention will appear evident from the following detailed description of an embodiment thereof, illustrated as non-limiting example in the enclosed drawings, in which:
Figure 1 is a schematic view of an apparatus for the continuous detection of oils according to an embodiment of the present invention;
Figure 2 is a block diagram of the apparatus in Figure 1;
Figure 3 is a section vertical plane section of an embodiment of the energising and receiving devices of light waves in Figure 1;
Figure 4 is a diagram of a part of the apparatus according to a variant of the embodiment in Figure 1;
Figure 5 is a top view of the apparatus in Figure 1 placed on a platform.

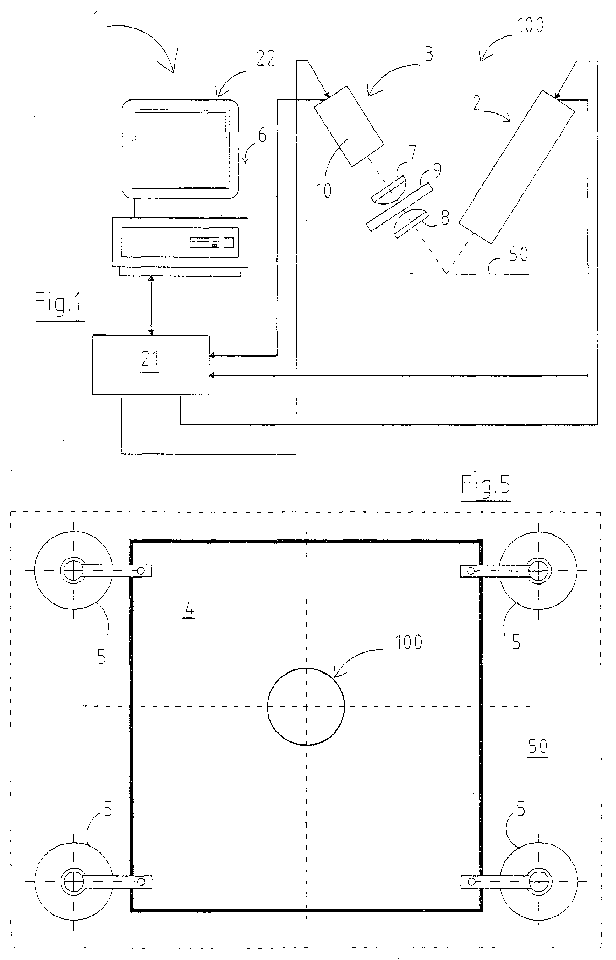

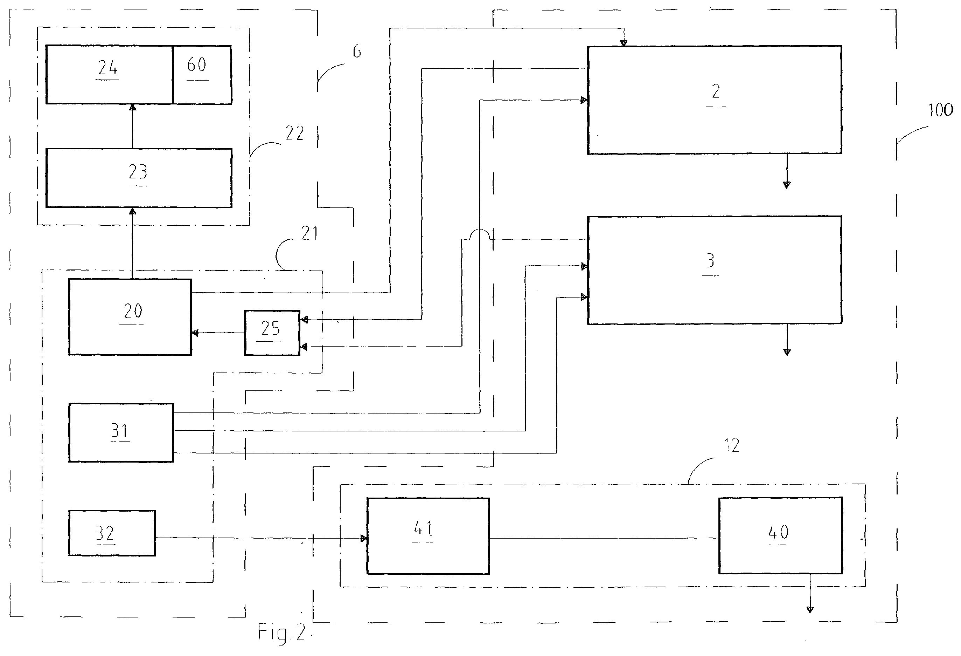

With reference to Figure 1 an equipment 1 for the continuous detection of oils on a water surface 50 according to an embodiment of the invention is shown. The equipment 1 comprises an apparatus 100 made up of an energising device 2 and a detecting device 3 placed on a platform 4 (Figure 5) positioned at a constant distance from the surface of the water by means of buoys 5, in turn placed at a sufficient distance from the measuring point so as not to alter the physical characteristics of the sample. The energising device 2 transmits an oblique light beam with a given wave length and modulated on the surface of the water, which reflects symmetrically the light radiation in a percentage depending on the refractive indices of the air-oil-water means, radiation which is detected by the detecting device 3. The latter records the data in the form of different electric signals according to the presence of oils on the surface and sends them to a data acquisition and elaboration system 6, shown in Figure 2, which records and memorises this data.

The energising device 2 is made up of a laser diode capable of emitting a ray with a diameter in the order of the millimetre with a power in the order of milliwatts and, for example, with a frequency of 10 Hz by application of a square wave with a wave length of 670 nm.

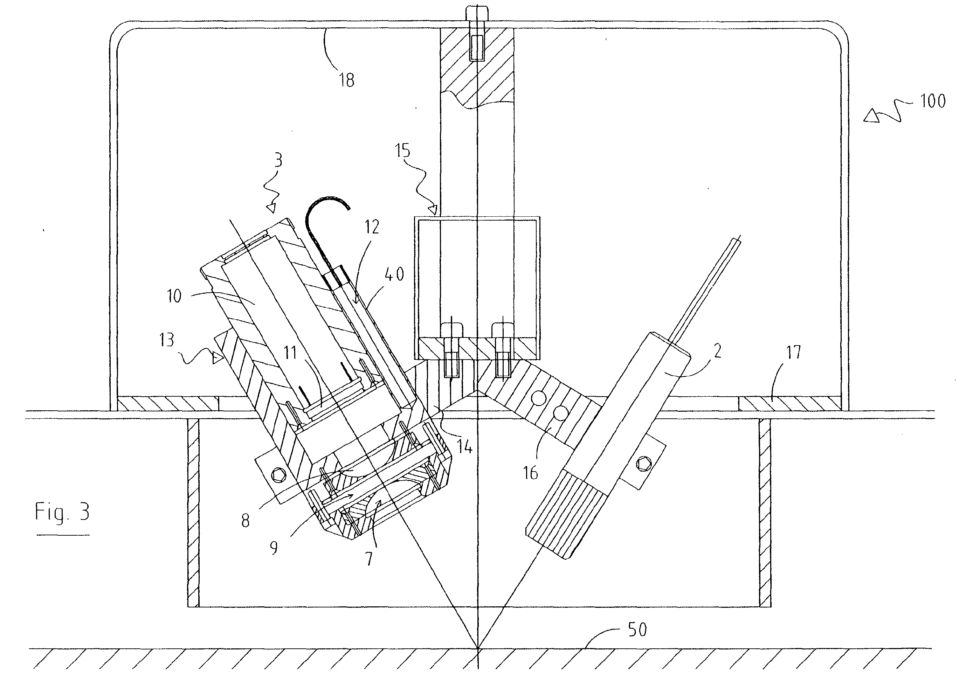

The detecting device 3, better shown as an example in Figure 3, comprises optic components positioned in relation to the incident ray so as to be able to detect the light reflected even for variations of the incident angle of about ± 14°. The detecting device 3 comprises a silicon photo-diode 10 which is sensitive to the reflected radiation and has a sensitive area 11 of 100 mm², which is preceded, in the arrival direction of the reflected radiation, by a device capable of filtering the sunlight which comprises two lenses 7 and 8 and an interferential filter 9, suitable for filtering sunlight, placed between the two lenses 7 and 8 and having a diameter of 50 mm and a FWHM (Full Width Half Maximum) of 10 nm. The detecting device 3 also comprises an optic device 12 capable of preventing the formation of condensation on the lenses 7 e 8, and to give an example, made up of an electric resistance 40 equipped with a regulation thermostat 41, visible in Figure 2.

The photo-diode 10, the lenses 7 and 8, the filter 9 and the optic device 12 are placed inside a body 13 connected by means of a flange 14 to a central body 15; the laser diode 2 is connected to the same central body 15 by means of a flange 16. The apparatus 100 is placed inside a hollow cylindrical body 17 equipped with a lid 18 to protect it from atmospheric agents. The laser diode 2 and the detecting device 3 are designed to function by angles that are not orthogonal to the platform 4, for example at 30°.

The data acquisition and elaboration system 6 comprises a data acquisition card 20 placed inside an interface 21 capable of exchanging data with a computer 22. The latter comprises a system 23 for elaborating the data coming from the interface 21 and a display 24 for visualising the data elaborated. The card 20 acquires analogical signals coming from the detecting device 3 and passing through low-pass filter 25 at 115 Hz and transmits analogical signals to the laser diode 2 to pilot the modulation.

The interface 21 also comprises direct current power supplies 31 and 32, for example at 15 V and at -15 V the 31 and at 24 V the 32, to supply both the laser diode 2 and the detecting device 3 with the power supply 31, and to supply the electric resistance 40 by means of the power supply 32. The interface 21 and the apparatus 100 are connected by BNC and multi-pole connectors.

The apparatus 1 also comprises an acoustic, luminous (led) or electronic alarm device 60 which is situated in the computer 22 and which can be interfaced with eventual process control systems; such alarm device is activated when the value of one of the data detected exceeds a preset threshold.

The platform 4 is made of a low-reflecting material and its dimensions are such that it shields the detecting device 3 from the sunlight.

The apparatus 1 according to the invention permits the detection of the presence of oils on surfaces at a minimum theoretical thickness of 10 nm.

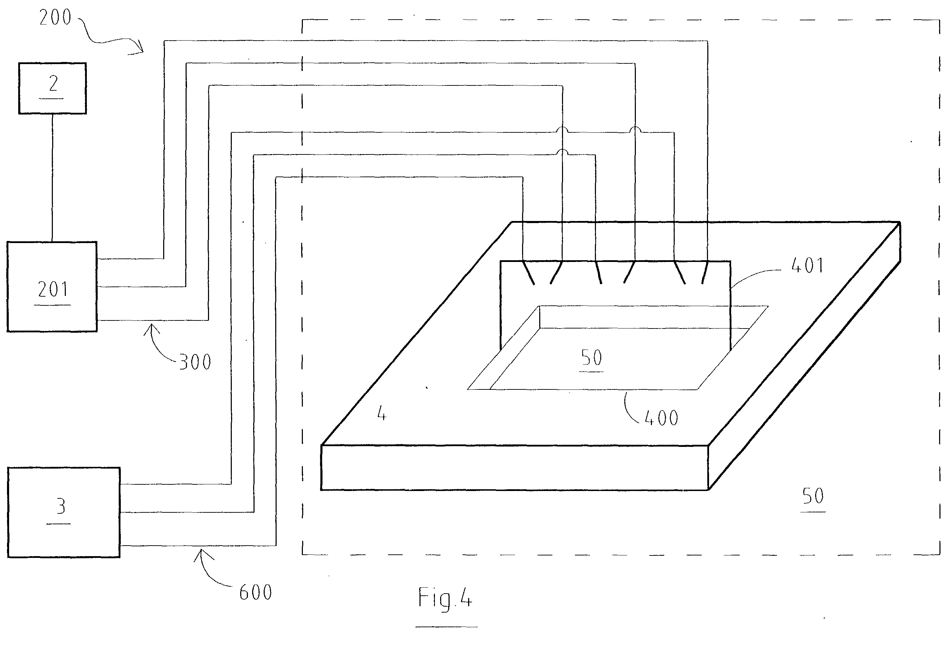

With the purpose of improving the quality of the measurement it is possible, according to a variant of the embodiment of the invention described, to extend the detection area by carrying out n measuring points. In such case the transmission of the optic signal both in energising and in receiving is carried out by the use of optic fibres but the process of elaborating the signal follows the same procedure as the first embodiment. The apparatus 1 comprises another type of apparatus 200, as can be seen in Figure 4, in which the laser diode 2 is connected to an optic switch 201 with one input and n outputs that permits the transmission of the laser beam in sequence into n optic fibres 300 terminated at the other end with suitable lenses. The detecting device 3 can be made up of one single photo-diode 10 connected to the extremities of the n receiving optic fibres 600, or in alternative can be made up of n photo-diodes 10 that substitute the n optic fibres 600. In any case the detecting device 3 is connected with the data acquisition and elaboration system 6 previously described. With said apparatus 200 numerous detections can be carried out at different points with consequent better definition of the degree of pollution of the waters. In addition, the electro-optic components are separated from the measuring point given that only the extremities of the optic fibres 300 and 600 are placed in the floating platform 4, and precisely on a support 401 along a rectangular hole 400 of the platform. Exceeding the threshold signal is established on the basis of the comparison of the n signals coming from the n fibres 600 with respective threshold values according to preset criteria. The alarm method is the same as that described previously.

The n optic fibres 300 are preferably multi-mode optic fibres and the sensitive area 11 of the photo-diode 10 of the detecting device 3, used in the variant to the embodiment of the invention described above, is in the order of 100 mm².

The apparatus 1 of the two embodiments described presents:
an adequate sensitivity to detect the presence of oils even in very fine layers, in the same order of size as those that can be seen by the human eye as surface iridescence, so that controversies can be resolved that can arise from the observation of possible surface oil pollution phenomena,
strong construction and complete independence from the environment conditions that make it suitable for use even under critical conditions,
independence from the variation of the level of the surface of the water by connecting the platform to buoys that do not influence the flow of possible oil spills,
absence of calibration and positive interference due to the presence of foreign floating bodies,
soundness and reliability of the measurement and low-cost execution due to the use of un-sophisticated components which nevertheless guarantee the expected performance,
absence of dirtying and surface condensation on the optic parts thanks to the non-invasive approach of the measurement and to the presence of a resistance-heating device.

## Claims

1. Apparatus for the continuous detection of oils on a water surface (50), comprising at least one light source (2; 2, 300) that sends a ray of light with a given wave length along a first direction inclined in relation to said water surface (50), a detecting device (3) equipped with at least a receiving means (3; 3, 600) positioned so that it receives the luminous radiation reflected by said water surface (50) along a first direction symmetrical to the first, an acquisition and elaboration system (6) for data coming from said detecting device (3), **characterised in that** said light source (2; 2, 300) and said receiving means (3; 3, 600) are placed on a floating platform (4) positioned on buoys (5) so as to be at an essentially fixed distance from said water surface (50).

2. Apparatus according to claim 1, **characterised in that** said at least one light source (2) is a laser diode placed on said platform (4).

3. Apparatus according to claim 1, **characterised in that** said at least one light source (2, 300) is made up of n optic fibres (300) with input extremities connected to a laser diode (2) external to the platform (4) and output extremity fixed on the platform (4).

4. Apparatus according to claim 3, **characterised in that** said input extremities of the n optic fibres (300) are connected to said laser diode (2) by means of an optic switch (201).

5. Apparatus according to claim 1, **characterised in that** said at least one receiving means (3) is a photo-diode (10) placed on said platform (4).

6. Apparatus according to claim 5, **characterised in that** said detecting device (3) comprises an optic device which precedes said photo-diode (10) in the direction of arrival of the reflected radiation, said optic device made up of an interferential filter (9) placed between two focal lenses (7, 8), said filter (9) having the task of filtering the sunlight.

7. Apparatus according to claim 6, **characterised in that** said detecting device (3) comprises a resistance-heating device (12) capable of preventing the formation of condensation on said focal lenses (7, 8).

8. Apparatus according to claim 5, **characterised in that** said photo-diode (10) has a sensitive area (11) which is basically equal to 100 mm².

9. Apparatus according to claim 1, **characterised in that** said at least one receiving means (3, 600) is composed of n receiving optic fibres (600) with output ends connected to at least one photo-diode (10) external to the platform (4) and input extremities fixed on the platform (4).

10. Apparatus according to claim 9, **characterised in that** said output extremities of the n receiving optic fibres (600) are connected to one single photo-diode (10).

11. Apparatus according to claim 9, **characterised in that** said at least one receiving means (3, 600) is composed of n photo-diodes (10).

12. Apparatus according to claim 9, **characterised in that** said at least one photo-diode (10) has a sensitive are (11) in the order of 100 mm².

13. Apparatus according to claim 1, **characterised in that** said data acquisition and elaboration system (6) comprises an alarm system (60) that is activated when the value of one of said data coming from the detecting device (3) exceeds the preset threshold.

14. Apparatus according to claim 1, **characterised in that** said buoys (5) are placed so as not to prevent the natural flow of the water and of any oil spills to be detected.

15. Apparatus according to claim 1, **characterised in that** said platform (4) is made up of a low reflecting material and its dimensions are such to screen said detecting device (3) from the sunlight.
